# EUROPEAN PATENT SPECIFICATION

(11) **EP 1 525 079 B1**
(45) Date of publication and mention of the grant of the patent: **26.03.2008**
(21) Application number: 03739230.5
(22) Date of filing: 20.06.2003
(51) Int. Cl.: B29C 33/40, B29C 33/42, H01J 9/24

(54) **Manufacturing method of a microstructure**
Verfahren zur Herstellung einer Mikrostruktur
Procédé de fabrication d'une microstructure

(30) Priority: 17.07.2002 JP 2002208326
(43) Date of publication of application: 27.04.2005
(73) Proprietor: 3M Innovative Properties Company, St. Paul, MN 55133-3427 (US)
(72) Inventor: YOKOYAMA, Chikafumi, Zama-shi, Kanagawa 225-0015 (JP); KAWAI, Takayuki, Machida-shi, Tokyo 194-0211 (JP)
(74) Representative: Vossius & Partner
(86) International application number: PCT/US2003/019495
(87) International publication number: WO 2004/010452

(56) References cited:
- WO-A-01/52299
- WO-A-20/04007166
- PATENT ABSTRACTS OF JAPAN vol. 1997, no. 02, 28 February 1997 (1997-02-28) -& JP 08 273538 A (DAINIPPON PRINTING CO LTD), 18 October 1996 (1996-10-18) cited in the application
- DOMININGHAUS HANS: "Die Kunststoffe und ihre Eigenschaften" 1992 , VDI VERLAG , DÜSSELDORF 1992 XP002261712 page 498
- "Permeability of Plastics and Elastomers" 1995 , PLASTIC DESIGN LIBRARY XP002261740 table 1
- PATENT ABSTRACTS OF JAPAN vol. 017, no. 694 (M-1531), 17 December 1993 (1993-12-17) -& JP 05 237952 A (DAISEN KOGYO:KK), 17 September 1993 (1993-09-17)

## Description

This invention relates to a molding technology. More particularly, this invention relates to a manufacturing method of a microstructure using a flexible mold.

Display devices that use a cathode ray tube (CRT) have economically been mass-produced owing to the progress and development of television technologies achieved up to this date, as is well known in the art. In recent years, however, a thin and lightweight flat panel display has drawn increasing attention as a display device that may replace CRT display devices.

A typical example of such flat panel displays is a liquid crystal display (LCD). LCDs have already been used as compact display devices in notebook type personal computers, cellular telephone sets, personal digital assistants (PDA), and other mobile electronic information devices. Plasma display panels (PDPs) are another example of thin, large-scale flat panel displays. PDPs have been used as wall-hung television receivers for business or home.

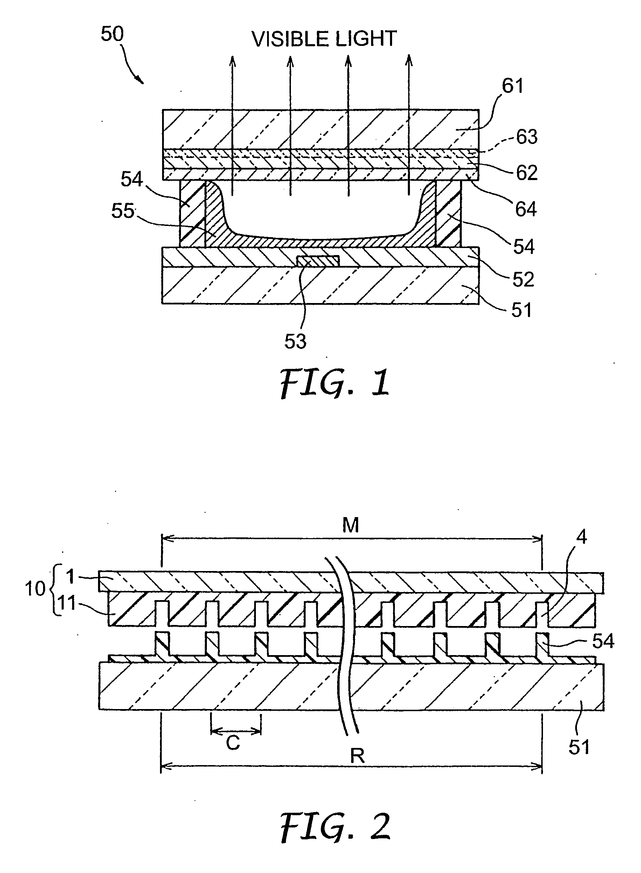

For example, Fig. 1 illustrates one example of a PDP 50. In the example shown in the drawing, only one discharge display cell 56 is shown in the PDP for simplification, but the PDP includes a large number of small discharge display cells. In detail, each discharge display cell 56 is encompassed and defined with a pair of glass substrates opposing each other in a spaced-apart relation, that is, a front glass substrate 61 and a back glass substrate 51, and a rib 54 of a microstructure having a predetermined shape and interposed in a predetermined shape between these glass substrates. The front glass substrate 61 has transparent display electrodes 63 each constituted by a scanning electrode and a holding electrode, and a transparent dielectric layer 62 and a transparent protective layer 64 that are arranged on the substrate 61. The back glass substrate 51 includes address electrodes 53 and a dielectric layer 52 formed thereon. The display electrodes 63 consisting of the scanning electrode and the holding electrode, and the address electrodes 53 cross one another and are respectively arranged in a predetermined pattern with gaps among them. Each discharge display cell 56 has a phosphor layer 55 on its inner wall, and a rare gas (for example, Ne-Xe gas) is filled into each discharge display cell so that self light emission can be effected by plasma discharge between the electrodes.

A rib (e.g., rib 54 of Fig. 1), which is generally formed of a ceramic microstructure, is located on the back glass substrate and constitutes a part of the PDP back plate. As described, in particular, in International Patent Publication No. 00/39829 and Japanese Unexamined Patent Publication (Kokai) Nos. 2001-191345 and 8-273538, a curable ceramic paste and a flexible resin mold can be used to manufacture such a PDP back plate. This flexible mold has a molding layer having groove portions of a predetermined pattern on a support, and the curable ceramic paste can be easily filled into the groove portions due to its flexibility without entrapping air bubbles. When this flexible mold is used, the mold release operation after curing of the paste can be conducted without damaging the ceramic microstructure (e.g., the rib) and the glass substrates.

To manufacture the PDP back plate, it has been further required to arrange the ribs at predetermined positions with hardly any error from the address electrodes. For, if each rib is more correctly disposed at the predetermined position and its dimensional accuracy is higher, better self-light emission becomes possible.

When the flexible mold described above is used to manufacture the PDP back plate, it is desirable to arrange easily, correctly and with high dimensional accuracy, the ribs at the predetermined positions without calling for a high level of skill. For, when the flexible mold is used to form the ribs, the ribs can be formed without entrapping the bubbles and without damaging the ribs as described herein.

WO 2004/007166 A1, which is a document under Article 54(3) EPC, relates to a flexible mold and a method of manufacturing a microstructure using said mold. The flexible mold has a groove pattern having a predetermined shape and a predetermined size on a surface thereof, comprising a base layer made of a first curable material having a viscosity of 3,000 to 100,000 cps at 10 to 80°C; and a coating layer made of a second curable material having a viscosity of not greater than 200 cps at 10 to 80°C, and coating a surface of said base layer. WO 2004/007166 also discloses a method of manufacturing a microstructure having a projection pattern having a predetermined shape and a predetermined size on a surface of a substrate, comprising the steps of preparing a flexible mold having a groove pattern having a shape and a size corresponding to those of said projection pattern on a surface thereof, and including a base layer made of a first curable material having a viscosity of 3,000 to 100,000 cps at 10 to 80°C and a coating layer made of a second curable material having a viscosity of not greater than 200 cps at 10 to 80°C, and coating a surface of said base layer; arranging a curable molding material between said substrate and said coating layer of said mold and filling said molding material into said groove pattern of said mold; curing said molding material and forming a microstructure having said substrate and said projection pattern integrally bonded to said substrate; and releasing said microstructure from said mold.

The present invention is defined by the features of the claims and provides a method of manufacturing a microstructure using a flexible mold that includes a support and a molding layer. The method may be used to manufacture PDP ribs or other molding layer. The method may be used to manufacture PDP ribs or other microstructures. Further, the method may be used to precisely arrange a protuberance such as a rib at a predetermined position with high dimensional accuracy and without defects such as bubbles or pattern deformation.

Typical problems that may occur in the conventional flexible molds described herein are greatly associated with a use environment of a size of a support constituting the mold, that is, fluctuation depending on a temperature and a relative humidity at the time of use of the mold, and consequently, the problems the solution of which has been believed impossible in the past can be solved if the mold can keep a desired predetermined dimension for at least a predetermined period in its use environment.

According to an aspect of the invention, there is provided a method of manufacturing a microstructure having a projection pattern having a predetermined shape and a predetermined size on a surface of a substrate, including providing a flexible mold including a support made of a material having a tensile strength of at least 49 N/mm² (5 kg/mm²) and containing moisture to saturation at a temperature and a relative humidity at the time of use by a moisture absorption treatment applied to the support in advance, and a molding layer disposed on the support, and having a groove pattern having a shape and a size corresponding to those of the projection pattern on a surface thereof providing a curable molding material between the substrate and the molding layer of the mold and filling the molding material into the groove pattern of the mold; curing the molding material and forming a microstructure having the substrate and the projection pattern integrally bonded to the substrate; and releasing the microstructure from the mold.

As described herein, it may be effective to use a support made of a material having rigidity against tension and having a moisture content in substantial saturation by a moisture absorption treatment applied in advance, that is, a support substantially containing moisture in saturation, for a flexible mold.

The invention will be described in connection with the drawings.
Fig. 1 is a sectional view showing an example of PDP according to the prior art to which the invention can also be applied.
Fig. 2 is a sectional view useful for explaining importance of dimensional accuracy in a flexible mold.
Fig. 3 is a perspective view showing a flexible mold used according to an embodiment of the invention.
Fig. 4 is a sectional view taken along a line IV - IV of Fig. 3.
Fig. 5 is a sectional view serially showing a manufacturing method (former half steps) of a flexible mold used according to the invention.
Fig. 6 is a sectional view serially showing a manufacturing method (latter half steps) of a flexible mold used according to the invention.
Fig. 7 is a sectional view showing distribution of first and second curable materials during a manufacturing process of a flexible mold used according to the invention.
Fig. 8 is a sectional view serially showing a manufacturing method (former half steps) of a PDP back plate according to the invention.
Fig. 9 is a sectional view serially showing a manufacturing method (latter half steps) of the PDP back plate according to the invention.

As described herein with reference to Fig. 1, the ribs 54 of the PDP 50 are disposed on the back glass substrate 51 and constitute the PDP back plate. In reference to FIG. 2, a distance c from an inside surface of one rib 54 to an inside surface of another adjacent rib 54 (i.e., cell pitch) is generally within a range of about 150 µm to about 400 µm, though the value varies depending on screen size. Generally, the ribs must satisfy two requirements: the ribs should be free from defects such as entrapment of bubbles and deformation, and the ribs should exhibit high pitch accuracy. As to pitch accuracy, the ribs 54 may be arranged at predetermined positions during formation with hardly any error from address electrodes. A positional error of only dozens of microns is acceptable. When the positional error exceeds this level, adverse influences occur on an emission condition of visible rays and satisfactory self emission display becomes more challenging. The problem of pitch accuracy of the ribs is critical at present as PDP screen sizes continue to increase.

When the ribs 54 are viewed as a whole, the total pitch (distance between the ribs 54 at both ends) R of the ribs 54 *(see,* e.g., Fig. 2) must generally have dimensional accuracy of not greater than dozens of ppm, though the value varies to a certain extent depending on the size of the substrate and the rib shape. Though it is useful to form the ribs 54 by use of a flexible mold 10 including a support 1 and a molding layer 11, the total pitch (distance between grooves 4 at both ends) M of the mold 10 must also have dimensional accuracy of not greater than dozens of ppm in the same way as the ribs 54.

In the case of the conventional flexible mold 10, the support 1 uses a rigid plastic film, and the molding layer 11 having the grooves 4 is formed of a photo-curable resin through molding. The plastic film used as the support is generally prepared by molding a plastic raw material into a sheet, and is commercially available as a roll of the sheet. The plastic film in the roll form contains little or no moisture because the moisture is lost during its production process and is under a dry state. When such a plastic film under the dry state is used to manufacture a mold in combination with a master metal mold, moisture absorption of the film starts occurring at the state where the plastic film is taken out from the roll, and a dimensional change occurs as a result of expansion of the film. This dimensional change occurs immediately after the mold is withdrawn from the master metal mold, and reaches a level of about 300 to about 500 ppm. Therefore, when such techniques are employed, dimensional accuracy of not greater than dozens of ppm necessary for the PDP rib-forming mold may not be achieved.

As further described herein, one embodiment of the present invention solves the problem of dimensional accuracy by applying a pre-treatment to a plastic film used to form the mold before it is supplied to the metal master mold. This pre-treatment may include applying a moisture absorption treatment to the plastic film before use. A suitable moisture absorption treatment is applied to the plastic film by spraying water or steam to the film, or by immersing the film into water or hot water, or by passing the film through a high-temperature high-humidity atmosphere, so that the moisture content of the film substantially reaches saturation. When such a pre-treatment is applied, the plastic film is stabilized to such an extent that it can no longer absorb the moisture.

To control pitch accuracy of the grooves of the flexible mold to dozens of ppm or below, it may be necessary to select plastic film for the support that is harder than the molding material (preferably a photo-curable material such as a photo-curable resin) constituting the molding layer that is associated with the formation of the grooves. Generally, a curing shrinkage ratio of photo-curable resins is several percents (%). Therefore, when a soft plastic film is used for the support, curing shrinkage of the film invites the dimensional change of the support itself, and pitch accuracy of the grooves cannot be controlled to dozens of ppm or below. When a rigid plastic film is used, dimensional accuracy of the support itself can be maintained even though the photo-curable resin undergoes curing shrinkage, and pitch accuracy of the grooves can be kept at a high level of accuracy. When the plastic film is rigid, pitch fluctuation, too, can be restricted to a low level when the ribs are formed. Therefore, the rigid plastic film is advantageous in both moldability and dimensional accuracy. Examples of rigid plastic films suitable for executing the invention are described herein. As used herein, the terms "rigid" or "hard" means that the support has required hardness, is difficult to undergo deformation in a transverse direction, but imparts required flexibility to the mold.

When the plastic film is rigid, pitch accuracy of the mold depends solely on the dimensional change of the plastic film. To produce in a stable way a mold having desired pitch accuracy, therefore, management must be made lest the dimension of the film changes before and after the production.

Generally, the dimension of a plastic film reversibly changes depending on the temperature and the relative humidity of the environment. As described herein, a commercial plastic film roll hardly contains moisture because the moisture is lost during the production process. Therefore, when the plastic film is taken out from the roll in an ordinary environment, the film absorbs moisture from the ambient air and starts expanding. When a polyethylene terephthalate (PET) film having a thickness of 188 µm is taken out from its roll at 22°C and 55% RH, for example, its dimension gradually increases due to moisture absorption, and about 6 hours later, the film stabilizes with a dimensional increase of 310 ppm.

As will be understood from Comparative Example 1 herein, when a mold is manufactured by using a PET film immediately after it is taken out from the roll, the mold has a pitch having a desired dimension immediately after manufacture, but the pitch dimension increases to 310 ppm after the passage of one day. In other words, when the plastic film is used to manufacture the mold immediately after the film is unwound from the roll, it may not be possible to obtain a mold having desired pitch accuracy. As is described in Example 1, when the PET film is exposed to the same environment (22°C and 55% RH) as the environment of the manufacture and is used to manufacture the mold in the same way as in Comparative Example 1, pitches having a desired dimension can be obtained. The pitch dimension does not change even after passage of one day but remains substantially the same as the dimension of the metal master mold conjointly used. In other words, when the film is allowed to sufficiently absorb the moisture to stabilize its dimension and is then used to manufacture the mold, dimensional change of the mold after manufacture can be suppressed.

It may be preferred to carry out the moisture absorption treatment of the plastic film as quickly as possible. Therefore, one embodiment of the present invention may include carrying out the moisture absorption treatment at a relatively high temperature. The moisture absorption rate of the plastic film becomes higher with an increasing temperature, and the time required to reach the saturation moisture content can be shortened when the pre-treatment is carried out at a higher temperature. To stabilize the dimension of a 188 µm-thick PET film, for example, the treatment time of about 6 hours is necessary at 22°C and 55% RH, but when this condition is changed to 45°C and 55% RH, the dimension can be stabilized within about 1 hour.

When the moisture absorption treatment is applied to the plastic film before molding according to the invention, it may be preferred to carry out the treatment at a temperature as high as possible as described herein. To suppress undesired thermal deformation of the plastic film, however, the high temperature applied to this treatment must be lower than the glass transition point (Tg) of the respective plastic films. Therefore, the treatment temperature for the moisture absorption treatment is lower than Tg of the plastic film but is preferably as high as possible. The suitable treatment temperature varies with the plastic film used. When the PET film is used, for example, the moisture absorption treatment is preferably carried out at a temperature around 60°C because its Tg is about 70°C. When the moisture absorption treatment is carried out at a high temperature in this way, the pre-treatment time can be drastically reduced and productivity can be improved.

On the other hand, the saturation moisture content of the plastic film depends on the relative humidity and is not affected by the temperature. Therefore, the relative humidity in the moisture absorption step is preferably equal to that of the production process of the plastic film. The most desirable treatment condition in the moisture absorption step is a temperature somewhat lower than Tg of the plastic film and a relative humidity substantially equal to that of the film production condition. When the moisture absorption treatment is applied under such a treatment condition, a sufficient amount of the moisture that achieves the relative humidity of the production environment and the equilibrium state can be imparted to the film within a short time, and dimensional fluctuation of the mold after the manufacture can be limited to minimum.

In summary, the support in the flexible mold used in the method according to the invention is not particularly limited so long as it is made of a material having rigidity against tension and its moisture content is in substantial saturation due to the moisture absorption treatment applied in advance. However, when the rigidity against tension is expressed in terms of the tensile strength, it is generally at least about 49N/mm² (5 kg/mm²) and preferably at least about 98N/mm²(10kg/mm²). When the tensile strength of the support is bellow 49N/mm² (5 kg/mm²), handling property drops when the resulting mold is released from the master metal mold or the PDP rib is withdrawn from the mold, and breakage and tear may occur.

A support suitable in the practice of the invention is a hygroscopic plastic film from the aspects of easiness of the moisture absorption treatment and the handling property, and is further a rigid plastic film. Examples of preferred plastic films are polyethylene terephthalate (PET), polyethylene naphthalate (PEN), stretched polypropylene, polycarbonate and triacetate, though these examples are in no way restrictive. These plastic films may be used either as a single-layered film or as a composite or laminate film of two or more kinds in combination.

The plastic film that can be advantageously, used as the support has a tensile strength of various levels. For example, the tensile strength is 176.5 N/mm² (18 kg/mm²) for PET 274.5 N/mm² (28 kg/mm²)for PEN 186.3 N/mm² (19 kg/mm²) for stretched polypropylene 98 N/mm² (10 kg/mm²) for polycarbonate, an 117.7 N/mm² (2 kg/mm²) for triacetate.

The plastic films described above have various moisture contents, though varying depending on the material and the environment of use. For example, the moisture content (at 22°C) of PET is 0.17wt% at 30%RH, 0.21wt% at 40%RH, 0.25wt% at 50%RH, 0.32wt% at 60%RH and 0.38wt% at 70%RH. When measured at 20°C and 50%RH, the moisture content is 0.3wt% for PET, 0.4wt% for PEN, 0.01 wt% for stretched polypropylene, 0.2wt% for polycarbonate and 4.4wt% for triacetate. It is estimated that the moisture contents of the respective plastic films are generally effective within the range of ±50% of the values described above.

The plastic films described above or other supports can be used at a variety of thickness depending on the constructions of the mold and the PDP. The thickness is generally within the range of about 0.05 mm to about 0.5 mm and preferably from about 0.1 mm to 0.4 mm. When the thickness is outside of these ranges, the handling property may drop. A greater thickness of the support is more advantageous from the aspect of strength.

The flexible mold used in the method according to the invention includes a molding layer formed on the support in addition to the support. As will be explained below in detail, the molding layer has on its surface a groove pattern having a predetermined shape and a predetermined size corresponding to the PDP ribs as the molding object or other protuberances. The molding layer preferably has a two-layered structure of a base layer and a coating layer as will be explained herein, though it may be formed into a single layer. When the use of a photo-curable molding material is taken into consideration, both support and molding layer are preferably transparent.

Embodiments of the present invention include a manufacturing method of a microstructure using the flexible mold. Preferred embodiments of these inventions will be explained hereinafter with reference to the accompanying drawings. As will be obvious to those skilled in the art, however, the invention is not particularly limited to the following embodiments. Incidentally, the same reference numeral will be used in the drawings to identify the same or corresponding portion.

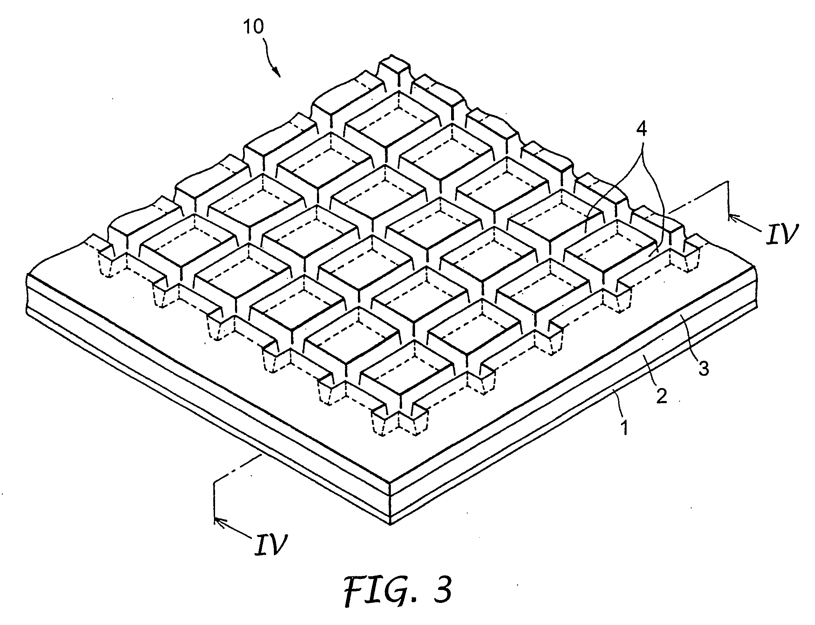

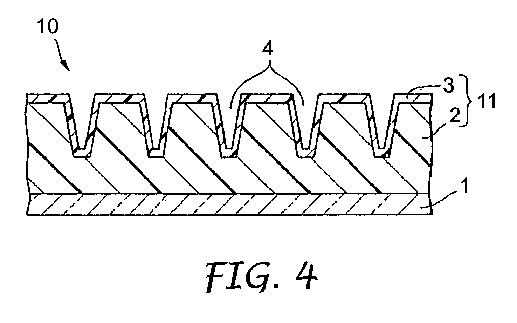

Fig. 3 is a partial perspective view that typically shows a flexible mold used according to an embodiment of the invention. Fig. 4 is a sectional view taken along a line IV-IV of Fig. 3.

As shown in these drawings, a flexible mold 10 has a groove pattern having a predetermined shape and a predetermined size on its surface. The groove pattern is a lattice pattern defined by a plurality of groove portions 4 that are arranged substantially parallel to one another while crossing one another and keeping predetermined gaps among them. Since the flexible mold 10 has the groove portions of the lattice pattern opening on the surface, it can be advantageously used for forming PDP ribs having a lattice projection pattern, for example, though it can be naturally applied to the manufacture of other microstructures. The flexible mold 10 may include an additional layer, whenever necessary, or an arbitrary treatment may be applied to each layer that constitutes the mold. However, the flexible mold 10 fundamentally includes a support 1 and a molding layer 11 having groove portions 4 thereon as shown in Fig. 4. Incidentally, the molding layer 11 shown in the drawings includes a base layer 2 and a coating layer 3.

The base layer 2 of the molding layer 11 is substantially uniformly made of a first curable material having a relatively high viscosity of 3,000 to 100,000 cps when measured at a temperature of 10°C to 80°C, but does not substantially or does not at all contain bubbles. Generally, such a first curable material does not smoothly undergo shrinkage when cured. Therefore, the mold having the grooves made of such a first curable material does not easily undergo deformation but has excellent dimensional stability.

The first curable material is a heat-curable material or a photo-curable material. Particularly when the first curable material is the photo-curable material, the flexible mold can be manufactured within a relatively short time without calling for an elongated heating furnace. A photo-curable material useful for the first curable material mainly contains an oligomer (curable oligomer) due to easy availability. Particularly when the oligomer is an acrylic oligomer such as a urethane acrylate oligomer and/or an epoxy acrylate oligomer, the base layer is optically transparent. Therefore, when this base layer is combined with a transparent coating layer as will be described herein, the flexible mold can use a photo-curable molding material because rays of light can be directed to the molding material even through the flexible mold.

The coating layer 3 is disposed on the surface of the base layer 2 proximate the base layer 2. In this instance, bubbles are excluded between the base layer 2 and the coating layer 3 on the former. The coating layer 3 is substantially uniformly formed of a second curable material having a relatively low viscosity of not higher than 200 cps when measured at 10°C to 80°C, but does not substantially or does not at all contain bubbles. This second curable material preferably has low tackiness. Because the coating layer 3 has low tackiness, tackiness on the surface of the flexible mold becomes low. Therefore, the handling property can be improved, and adhesion of the forming mold to the substrate and the production apparatus can be prevented.

The second curable material may be either the heat-curable material or the photo-curable material in the same way as the first curable material. Unlike the first curable material, however, the photo-curable material useful for the second curable material includes a monomer (curable monomer). Particularly when the monomer is an acrylic monomer such as acrylamide, acrylonitrile, acrylic acid, acrylic acid ester, and so forth, the coating layer becomes optically transparent. Therefore, the flexible mold can use the photo-curable molding material in combination with the transparent base layer as described above.

The support 1 for supporting the molding layer 11 is preferably a plastic film as already explained in detail, and its thickness is generally from about 0.05 mm to about 0.5 mm. Preferably, the support is optically transparent. When the support is optically transparent, the rays of light irradiated for curing can transmit through the support. Therefore, the photo-curable first and second curing materials can be used for respectively forming the base layer and the coating layer. Particularly when the support is uniformly formed of the transparent material, the uniform base layer and coating layer can be formed more effectively. Typical examples of the transparent support are described herein.

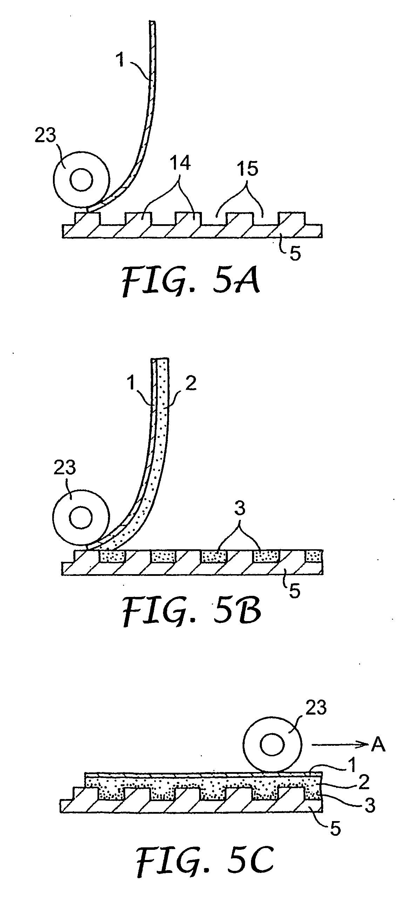

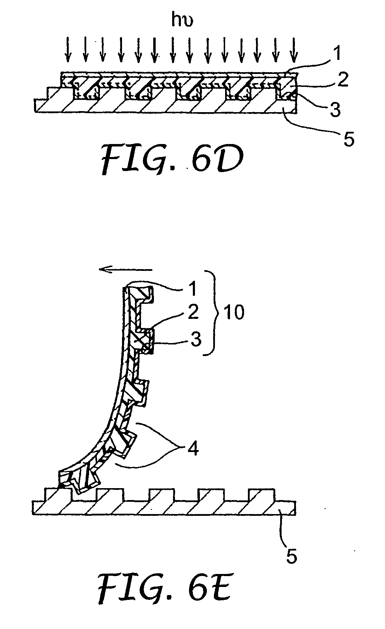

The flexible mold used in the method according to the invention can be manufactured by various means. When the photo-curable first and second curable materials are used, for example, the flexible mold can be advantageously manufactured in the sequence shown in Figs. 5 and 6.

First, a metal master mold 5 having a shape and a size corresponding to those of a flexible mold as the object of manufacture, a support 1 formed of a transparent plastic film (hereinafter called a "support film") and a laminate roll 23 are prepared as shown in Fig. 5(A). Here, since the flexible mold is used for manufacturing the PDP back plate, in particular, the metal master mold 5 has partitions 14 having the same pattern and the same shape as those of the ribs of the PDP back plate on its surface. Therefore, the space (recess) 15 defined by adjacent partitions 14 is the portion that is to become a discharge display cell of PDP. The laminate roll 23 is one technique for pressing the support film 1 to the metal master mold 5, and known and customary laminate techniques may be used in place of the laminate roll 23, whenever necessary.

Next, known and customary coating techniques (not shown) such as a knife coater or a bar coater may be used to apply the photo-curable first curable material 2 to one of the surfaces of the support film 1 to a predetermined thickness as shown in Fig. 5(B). The photo-curable second curable material 3 is applied to the partition-holding surface of the metal master mold 5 to a predetermined thickness by the same techniques, and is filled into the recess 15 defined in the gap between the partitions 14. In this invention, the second curable material 3 is easy to fluidize due to its low viscosity. Therefore, even when the metal master mold 5 has the partitions 14 having a high aspect ratio, the second curable material 3 can be uniformly filled without entrapping the bubbles.

Next, the laminate roll 23 is caused to slide on the metal master mold 5 while the first curable material 2 and the second curable material 3 keep adhesion with each other in a direction indicated by arrow A in Fig. 5(C). As a result of this laminate treatment, the second curable material 3 can be uniformly removed from the substantial portion of the recess 15.

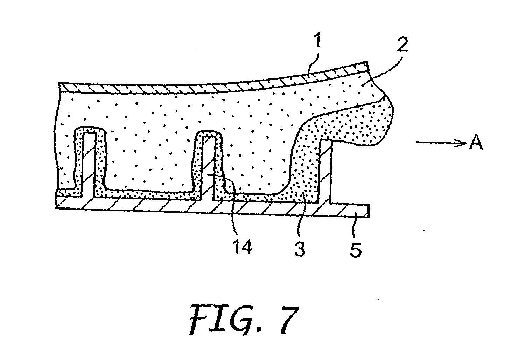

It may be preferred during this laminate treatment to bring both curable materials into adhesion while the distance from the top (free end) of the partitions 14 to the support film 1 is kept sufficiently greater than the height of the partitions (for example, at least 1/10 of the height of the partitions). For, it is possible to effectively exclude most of the second curable material 3 from the space of the partitions 14 and to replace it by the first curable material 2 as shown in Fig. 7. As a result, the base layer 2 can be used for forming the groove pattern of the mold besides the coating layer 3.

After the laminate treatment is completed, the rays of light (hv) are irradiated to the first and second curable materials 2 and 3 through the support film 1 while the support film 1 is laminated on the metal master mold 5 as shown in Fig. 6(D). When the support film 1 does not contain light scattering elements such as the bubbles but is uniformly formed of the transparent material, the rays of light irradiated hardly attenuate and can uniformly reach the first and second curable materials 2 and 3. As a result, the first curable material is efficiently cured to give the uniform base layer 2 that is bonded to the support film 1. The second curing materialis similarly cured to give the uniform coating layer 3 bonded to the base layer 2.

After a series of manufacturing steps described herein, there is obtained a flexible mold including the support film 1, the base layer 2 and the coating layer 3 that are integrally bonded to one another. Thereafter, the flexible mold 10 is released from the metal master mold 5 while keeping its integrity as shown in Fig. 6(E).

This flexible mold can be manufactured relatively easily irrespective of its size in accordance with known and customary laminate means and coating means. Therefore, unlike the conventional manufacturing techniques that use vacuum equipment such as a vacuum press machine, this invention can easily manufacture a large flexible mold without any limitation.

Furthermore, the flexible mold used in the method according to the invention is useful for manufacturing various microstructures. As disclosed in Japanese Unexamined Patent Publication (Kokai) No. 2001-191345, for example, the mold is particularly and extremely useful for molding ribs of DPD having a lattice pattern. When this flexible mold is employed, it becomes possible to easily manufacture a large screen PDP having lattice ribs, in which ultraviolet rays do not easily leak from discharge display cells, by merely using a laminate roll in place of vacuum equipment and/or a complicated process.

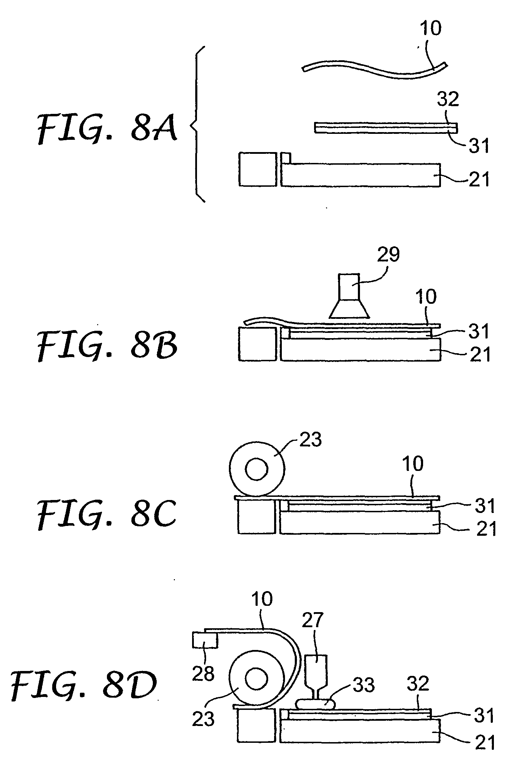

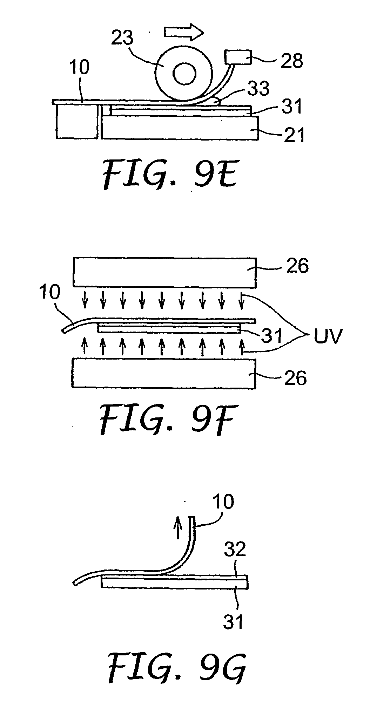

Next, a method of manufacturing a PDP substrate having ribs on a flat glass sheet by using the manufacturing equipment shown in Figs. 1 to 3 of Japanese Unexamined Patent Publication (Kokai) No. 2001-191345 described above will be explained with reference to Figs. 8 and 9.

First, as shown in Fig. 8(A), a flat glass sheet 31 having electrodes 32 arranged in a mutually parallel configuration with predetermined gaps and prepared in advance is arranged on a support table 21. If a stage, not shown, capable of displacement is used, the support table 21 supporting the flat glass sheet 31 thereon is put at a predetermined position of the stage.

Next, the flexible mold 10 having the groove pattern on its surface which is used according to one embodiment of the invention is set to a predetermined position of the flat glass sheet 31,

The flat glass sheet 31 and the mold 10 are then positioned relative to each other. In detail, this positioning is made with eye or by use of a sensor 29 such as a CCD camera in such a fashion that the groove portions of the mold 10 and the electrodes of the flat glass sheet 31 are parallel as shown in Fig. 8(B). At this time, the groove portions of the mold 10 and the spaces between the adjacent electrodes on the flat glass sheet 31 may be brought into conformity by adjusting the temperature and humidity, whenever necessary. Generally, the mold 10 and the flat glass sheet 31 undergo extension and contraction in accordance with the change of the temperature and humidity, and the degrees of contraction/extension are different. Therefore, control is so made as to keep constant the temperature and humidity when positioning between the flat glass sheet 31 and the mold 10 is completed. Such a control method is particularly effective for the manufacture of a large-area PDP substrate

Subsequently, the laminate roll 23 is set to one of the end portions of the mold 10 as shown in Fig. 8(C). One of the end portions of the mold 10 is preferably fixed at this time onto the flat glass sheet 31. In this way, deviation of positioning between the flat glass sheet 31 and the mold 10 previously positioned can be prevented.

Next, as shown in Fig. 8(D), the other free end portion of the mold 10 is lifted up and moved with a holder 28 above the laminate roll 23 to expose the flat glass sheet 31. Caution is to be paid at this time not to impart any tension to the mold 10 so as to prevent crease of the mold 10 and to keep positioning between the mold 10 and the flat glass sheet 31. Other means may also be employed so long as positioning can be kept. A predetermined amount of a rib precursor 33 necessary for forming the ribs is supplied onto the flat glass sheet 31. The example shown in the drawing uses a paste hopper 27 having a nozzle as a rib precursor feeder.

Here, the term "rib precursor" means an arbitrary molding material capable of forming the rib molding as the final object, and does not particularly limit the materials so long as they can form the rib molding. The rib precursor may be of a heat-curing type or a photo-curing type. As will be explained below with reference to Fig. 9(F), the photo-curing rib precursor, in particular, can be used extremely effectively in combination with the transparent flexible mold described above. The flexible mold hardly has defects such as bubbles and deformation and can suppress non-uniform scattering of light. In consequence, the molding material is uniformly cured and provides a rib having constant and excellent quality.

An example of compositions suitable for the rib precursor basically contains (1) a ceramic component giving the rib shape, such as aluminum oxide, (2) a glass component filling gaps between the ceramic components and imparting compactness to the ribs, such as lead glass or phosphate glass and (3) a binder component for storing, holding and bonding the ceramic components, and a curing agent or a polymerization initiator for the binder component. Preferably, curing of the binder component does not rely on heating but uses irradiation of light. In such a case, heat deformation of the flat glass sheet need not be taken into consideration. An oxidation catalyst consisting of oxides, salts or complexes of chromium (Cr), manganese (Mn), iron (Fe), cobalt (Co), nickel (Ni), copper (Cu), zinc (Zn), indium (In) or tin (Sn), ruthenium (Ru), rhodium (Rh), palladium (Pd), silver (Ag), iridium (Ir), platinum (Pt), gold (Au) or cerium (Ce) is added to this composition, whenever necessary, so as to lower a removal temperature of the binder component.

To carry out the manufacturing method shown in the drawings, the rib precursor 33 is not uniformly supplied to the entire part of the flat glass sheet 31. In other words, the rib precursor 33 may be supplied to only the flat glass sheet 31 in the proximity of the laminate roll 23 as shown in Fig. 8 (D). For, the rib precursor 33 can be uniformly spread when the laminate roll 23 moves on the mold 10 in the subsequent step. However, a viscosity of about 100,000 cps or below, preferably about 20,000 cps or below, is preferably imparted to the rib precursor 33 in this case. When the viscosity of the rib precursor is higher than about 100,000 cps, the laminate roll does not sufficiently spread the rib precursor, so that air is entrapped into the groove portions of the mold and results in the rib defects. As a matter of fact, when the viscosity of the rib precursor is about 100,000 cps or below, the rib precursor uniformly spreads between the flat glass sheet and the mold only when the laminate roll is moved once from one of the end portions of the flat glass sheet to the other, and the rib precursor can be uniformly filled into all the groove portions without entrapping bubbles. However, the supplying method of the rib precursor is not limited to the method described above. For example, the rib precursor may be coated to the entire surface of the flat glass sheet, though this method is not shown in the drawings. At this time, the rib precursor for coating has the same viscosity as the viscosity described above. Particularly when the ribs of the lattice pattern are formed, the viscosity is about 20,000 cps or below, preferably about 5,000 cps or below.

Next, a rotating motor (not shown) is driven to move the laminate roll 23 on the mold 10 at a predetermined speed as indicated by arrow in Fig. 9(E). While the laminate roll 23 moves on the mold 10 in this way, the pressure is serially applied to the mold 10 from one of its ends to the other due to the self-weight of the laminate roll 23. Consequently, the rib precursor 33 spreads between the flat glass sheet 31 and the mold 10 and the molding material is filled into the groove portions of the mold 10. In other words, the rib precursor 33 of the groove portions serially replaces air and is filled. The thickness of the precursor at this time can be adjusted to a range of several microns to dozens of microns when the viscosity of the rib precursor or the diameter, weight or moving speed of the laminate roll is controlled appropriately.

According to the manufacturing method of the invention shown in the drawings, even when the groove portions of the mold serve as channels of air and collect air, they can efficiently discharge air outside or to the periphery of the mold when they receive the pressure described above. As a result, the manufacturing method of the invention can prevent residual bubbles even when filling of the rib precursor is carried out at the atmospheric pressure. In other words, vacuum need not be applied to fill the rib precursor. Needless to say, the bubbles may be removed more easily in vacuum.

Subsequently, the rib precursor is cured. When the rib precursor 33 spread on the flat glass sheet 31 is of the photo-curing type, the rib precursor (not shown) is placed with the flat glass sheet 31 and the mold 10 into a light irradiation apparatus 26 as shown particularly in Fig. 9(F), and the rays of light such as ultraviolet rays (UV) are irradiated to the rib precursor through the flat glass sheet 31 and/or the mold 10 to cure the rib precursor. In this way, the molding of the rib precursor, that is, the rib itself, can be acquired.

Finally, the resulting ribs as bonded to the flat glass sheet 31, the flat glass sheet 31 and the mold 10 are withdrawn from the light irradiation apparatus, and the mold 10 is then peeled and removed as shown in Fig. 9(G). Since the mold according to the invention has high handling property, the mold can be easily peeled and removed without breaking the ribs bonded to the flat glass sheet.

Though the invention has thus been explained with reference to one preferred embodiment thereof, the invention is not particularly limited thereto.

The flexible mold is not particularly limited to the form described above so long as it can accomplish the objects and the operation and effect of the invention. For example, the flexible mold may have a so-called "straight groove pattern" formed by arranging a plurality of groove portions in substantially parallel with one another with gaps among them without crossing one another. Such a flexible mold can be used for forming a rib of PDP of a straight pattern.

The flexible mold used in the method according to the invention is not solely used for forming the PDP ribs but can be advantageously used for forming a variety of microstructures having similar shapes or patterns.

Further, the invention can advantageously manufacture the PDP previously explained with reference to Fig. 1 and other types of PDP. Because the detailed construction, dimensions, etc, of PDP are well known in the art, the explanation will be hereby omitted.

### EXAMPLES

The invention will be more concretely explained with reference to several examples thereof. However, the invention is not limited to the following examples as will be obvious to those skilled in the art.

### Example 1

To manufacture a PDP back plate, this example prepares a rectangular metal master mold having ribs (partitions) of a straight pattern. The explanation will be given in further detail. This metal master mold is constituted by ribs having an isosceles trapezoidal section and arranged in a predetermined pitch in a longitudinal direction. The spaces (recess) defined by the adjacent ribs correspond to discharge display cells of PDP. Each rib has a height of 208 µm a top width of 55 µm and a bottom width of 115 µm A pitch (distance between the adjacent rib centers) is 359.990 µm, and the number of ribs is 2,943. A total pitch of the ribs (distance between rib centers at both ends) is (2,943 - 1) x 0.35999 = 1,059.091 mm.

A first curable material is prepared by mixing 80wt% of aliphatic urethane acrylate oligomer (a product of Henkel Co., trade name "Photomer 6010"), 20wt% of 1,6-hexanediol diacrylate (a product of Shin-Nakamura Kagaku K K.) and 1wt% of 2-hydroxy-2-methyl-1-phenyl-propane-1-on (a product of Ciba Specialties Chemicals Co., trade name "Darocure 1173"). When the viscosity of this first curable material is measured by a Brookfield viscometer (B type viscometer), it is 8,500 cps at 22°C.

A PET film having a width of 1,300 mm and a thickness of 188 µm and wound on a roll (a product of Teijin K. K., a trade name "HPE188") is prepared to use it as a support of a mold. The PET film is taken out from the roll under an environment of 22°C and 55%RH and is as such left standing for 6 hours. A moisture content of the PET film is about 0.30wt%.

Subsequently, a mold is manufactured and inspected in the following way while the environment of 22°C and 55%RH is maintained.

The photo-curable resin prepared by the preceding step is applied in a line form to the upstream end of a metal master mold prepared separately. Next, a PET film subjected to the moisture absorption treatment as described above is laminated in such a fashion as to cover the metal master mold. When the PET film is sufficiently pressed by use of a laminate roll, the photo-curable resin is filled into the recesses of the metal master mold.

Under this state, the rays of light having a wavelength of 300 nm to 400 nm are irradiated from a florescent lamp, a product of Mitsubishi Denki-Oslam Co., to the photo-curable resin for 30 seconds through the PET film. The photo-curable resin is thus cured and gives a molding layer. Subsequently, the PET film is peeled from the metal master mold together with the molding layer, and there is obtained a flexible mold having a large number of groove portions having a shape and a dimension corresponding to those of the ribs of the metal master mold.

When the total pitch of the mold is measured time-wise with the point immediately after the peel of the mold from the metal master mold as the starting point, the measurement result can be obtained as tabulated in the following Table 1.

### Comparative Example 1

A flexible mold is manufactured and inspected in the same way as in Example 1 with the exception that the PET film wound on the roll is taken out and is immediately used under the environment of 22°C and 55%RH without applying the moisture absorption treatment to the PET film rolled on the roll for the sake of comparison.

When the total pitch of the mold is measured time-wise with the point immediately after the peel of the mold from the metal master mold as the starting point in the same way as in Example 1, the measurement result can be obtained as tabulated in the following Table 1.

**Table 1**

| metal master mold or mold | time passed | change of total pitch (unit: mm) | |
|---|---|---|---|
| | | Example 1 | Comparative Example 1 |
| metal master mold* | - | 1059.091 | 1059.091 |
| mold | 10 min. | 1059.065 | 1059.084 |
| | 60 min. | 1059.076 | 1059.199 |
| | 180 min. | 1059.093 | 1059.289 |
| | 1 day | 1059.086 | 1059.394 |

| | | | |
|---|---|---|---|
| metal master mold* ... total pitch of ribs of mold | | | |

As can be understood from the measurement result shown in Table 1, the total pitch of the mold of Example 1 exhibits a change of only about 20 ppm after the passage of one day immediately after the production. This change amount means that an error is at most about 20 ppm to the total pitch of the mold as the target, and sufficiently satisfies dimensional accuracy of within dozens of ppm required for the mold for the PDP ribs.

In contrast, the total pitch of the mold of Comparative Example 1 is substantially equal to that of Example 1 immediately after the production but gradually increases with time, and reaches about 310 ppm after the passage of one day. In other words, the total pitch of the mold after the passage of one day is greater by about 310 ppm than the total pitch of the mold as the target, and fails to satisfy dimensional accuracy required for the mold for the PDP rib.

## Claims

1. A method of manufacturing a microstructure having a projection pattern having a predetermined shape and a predetermined size on a surface of a substrate, comprising the steps of:
providing a flexible mold (10) comprising a support (1) made of a material having a tensile strength of at least 49 N/mm² (5 kg/mm²) and containing moisture to saturation at a temperature and a relative humidity at the time of use by a humidity absorption treatment applied to the support (1) in advance of preparing the world (10), and a molding layer (11) disposed on said support (1) and having a groove pattern having a shape and a size corresponding to those of said projection pattern on a surface thereof;
providing a curable molding material between said substrate and a molding layer (11) of said mold (10) and filling said molding material into said groove pattern of said mold;
curing said molding material and forming a microstructure having said substrate and said projection pattern integrally bonded to said substrate; and
releasing said microstructure from said mold (10).

2. A manufacturing method as defined in claim 1, wherein said support (1) and said molding layer (11) are transparent.

3. A manufacturing method as defined in claim 1 or 2, wherein said support (1) is a film of a hygroscopic plastic material.

4. A manufacturing method as defined in claim 3, wherein said hygroscopic plastic material is at least one kind of plastic material selected from the group consisting of polyethylene terephthalate, polyethylene naphthalate, stretched polypropylene, polycarbonate and triacetate.

5. A manufacturing method as defined in any one of claims 1 to 4, wherein said support (1) has a thickness of 0.05 to 0.5 mm.

6. A manufacturing method as defined in any one of claims 1 to 5, wherein said molding layer (11) comprises a base layer (2) made of a first curable material having a viscosity of 3,000 to 100,000 cps at 10 to 80°C and a coating layer (3) made of a second curable material having a viscosity of not higher than 200 cps at 10 to 80°C, the coating layer (3) being applied over a surface of said molding layer (11).

7. A manufacturing method as defined in claim 6, wherein said first curable material and said second curable material are photo-curable materials.

8. A manufacturing method as defined in any one of claims 1 to 7, wherein the groove pattern of said molding layer (11) is a lattice pattern constituted by a plurality of groove portions (4) arranged substantially in parallel while crossing one another with predetermined gaps among them.

9. A manufacturing method as defined in any one of claim 1 to 8, wherein said molding material (11) is a photo-curable material,

10. A manufacturing method as defined in any of claim 1 to 9, wherein said microstructure is a back plate for a plasma display panel.

11. A manufacturing method as defined in claim 10, which further comprises a step of independently arranging a set of address electrodes substantially in parallel with each other while keeping a predetermined gap between them on a surface of said substrate.

## Patentansprüche

1. Verfahren zur Herstellung einer Mikrostruktur mit einem Projektionsmuster mit einer vorbestimmten Form und einer vorbestimmten Größe auf einer Oberfläche eines Substrats, das folgende Schritte aufweist:
Bereitstellen eines flexiblen Formkörpers (10), der einen Träger (1) aus einem Material, das eine zugfestigkeit von mindestens 49 N/mm² (5 kg/mm²) besitzt und bei einer Temperatur und relativen Luftfeuchte zum Zeitpunkt der Verwendung Sättigungsfeuchtigkeit aufgrund einer Luftfeuchteabsoprtionsbehandlung enthält, die vor der Herstellung des Formkörpers (10) auf den Träger (1) angewandt wird, und eine Formschicht (11) aufweist, die auf dem Träger (1) angeordnet ist und ein Rillenmuster mit einer Form und Größe besitzt, die der des Projektionsmusters auf ihrer Oberfläche entspricht,
Bereitstellen eines härtbaren Formmaterials zwischen dem Substrat und einer Formschicht (11) des Formkörpers (10) und Füllen des Formmaterials in das Rillenmuster des Formkörpers,
Härten des Formmaterials und Bilden einer Mikrostruktur mit diesem Substrat, bei der das Projektionsmuster einstückig an das Substrat gebunden ist, und
Ablösen der Mikrostruktur vom Formkörper (10).

2. Herstellungsverfahren nach Anspruch 1, wobei der Träger (1) und die Formschicht (11) transparent sind.

3. Herstellungsverfahren nach Anspruch 1 oder 2, wobei der Träger (1) eine Folie aus hygroskopischem Kunststoffmaterial ist.

4. Herstellungsverfahren nach Anspruch 3, wobei das hygroskopische Kunststoffmaterial mindestens eine Art von Kunststoffmaterial ist, das aus der Gruppe ausgewählt ist, die aus Polyethylenterephthalat, Polyethylennaphthalat, gedehntem Polypropylen, Polycarbonat und Triacetat besteht.

5. Herstellungsverfahren nach einem der Ansprüche 1 bis 4, wobei der Träger (1) eine Dicke von 0,05 bis 0,5 mm besitzt.

6. Herstellungsverfahren nach einem der Ansprüche 1 bis 5, wobei die Formschicht (11) eine Grundschicht (2), die aus einem ersten härtbaren Material mit einer Viskosität von 3.000 bis 100.000 cps bei 10 bis 80°C besteht, und eine Beschichtung (3) aufweist, die aus einem zweiten härtbaren Material mit einer Viskosität von nicht mehr als 200 cps bei 10 bis 80°C besteht, wobei die Beschichtung (3) auf eine Oberfläche der Formschicht (11) aufgebracht ist.

7. Herstellungsverfahren nach Anspruch 6, wobei das erste härtbare Material und das zweite härtbare Material photohärtbare Materialien sind.

8. Herstellungsverfahren nach einem der Ansprüche 1 bis 7, wobei das Rillenmuster der Formschicht (11) ein gitterartiges Muster ist, das sich aus mehreren Rillenabschnitten (4) zusammensetzt, die im Wesentlichen parallel angeordnet sind und sich mit vorbestimmten Abständen zwischen ihnen kreuzen.

9. Herstellungsverfahren nach einem der Ansprüche 1 bis 8, wobei das Formmaterial (11) ein photohärtbares Material ist.

10. Herstellungsverfahren nach einem der Ansprüche 1 bis 9, wobei die Mikrostruktur eine Rückplatte für einen Plasmabildschirm ist.

11. Herstellungsverfahren nach Anspruch 10, das ferner einen Schritt des getrennten Anordnens einer Gruppe von Adresselektroden aufweist, die im Wesentlichen parallel zueinander verlaufen und dabei an einer Oberfläche des Substrats einen vorbestimmten Abstand voneinander einhalten.

## Revendications

1. Procédé de fabrication d'une microstructure comportant un motif de saillies ayant une forme prédéterminée et une taille prédéterminée sur une surface d'un substrat, comprenant les étapes consistant à :
se procurer un moule flexible (10) comprenant un support (1) réalisé en un matériau ayant une résistance à la traction d'au moins 49 N/mm² (5 kg/mm²) et contenant une humidité à saturation à une température et une humidité relative au moment d'être utilisé résultant d'un traitement d'absorption d'humidité appliqué au support (1) avant de préparer le moule (10), et une couche de moulage (11) disposée sur ledit support (1) et comportant un motif de rainures ayant une forme et une taille correspondant à celles dudit motif de saillies sur une surface de celle-ci ;
se procurer un matériau de moulage durcissable entre ledit substrat et la couche de moulage (11) dudit moule (10) et remplir avec ledit matériau de moulage ledit motif de rainures dudit moule ;
durcir ledit matériau de moulage et former une microstructure comportant ledit substrat et ledit motif de saillies intégralement collé audit substrat ; et
libérer ladite microstructure dudit moule (10).

2. Procédé de fabrication selon la revendication 1, dans lequel ledit support (1) et ladite couche de moulage (11) sont transparents.

3. Procédé de fabrication selon la revendication 1 ou 2, dans lequel ledit support (1) est un film d'un matériau plastique hygroscopique.

4. Procédé de fabrication selon la revendication 3, dans lequel ledit matériau plastique hygroscopique est au moins un type de matériau plastique choisi dans le groupe constitué par le téréphtalate de polyéthylène, le naphtalate de polyéthylène, le polypropylène étiré, le polycarbonate et le triacétate.

5. Procédé de fabrication selon l'une quelconque des revendications 1 à 4, dans lequel ledit support (1) a une épaisseur de 0,05 à 0,5 mm.

6. Procédé de fabrication selon l'une quelconque des revendications 1 à 5, dans lequel ladite couche de moulage (11) comprend une couche de base (2) réalisée à partir d'un premier matériau durcissable ayant une viscosité de 3000 à 100 000 cps à 10 jusqu'à 80 °C et une couche de revêtement (3) réalisée à partir d'un deuxième matériau durcissable ayant une viscosité inférieure ou égale à 200 cps à 10 jusqu'à 80°C, la couche de revêtement (3) étant appliquée sur une surface de ladite couche de moulage (11).

7. Procédé de fabrication selon la revendication 6, dans lequel ledit premier matériau durcissable et ledit deuxième matériau durcissable sont des matériaux photodurcissables.

8. Procédé de fabrication selon l'une quelconque des revendications 1 à 7, dans lequel le motif de rainures de ladite couche de moulage (11) est un motif en forme de réseau constitué par une pluralité de portions de rainures (4) disposées de façon sensiblement parallèle tout en se croisant avec des écarts prédéterminés entre celles-ci.

9. Procédé de fabrication selon l'une quelconque des revendications 1 à 8, dans lequel ledit matériau de moulage (11) est un matériau photodurcissable.

10. Procédé de fabrication selon l'une quelconque des revendications 1 à 9, dans lequel ladite microstructure est une plaque arrière pour un écran à plasma.

11. Procédé de fabrication selon la revendication 10, qui comprend en outre une étape consistant à disposer indépendamment un ensemble d'électrodes d'adresse sensiblement parallèles les unes aux autres tout en maintenant un écart prédéterminé entre celles-ci sur une surface dudit substrat.
